Europäisches Patentamt

**European Patent Office**

**Office européen des brevets**

(19)

(11) Numéro de publication: **0 050 178**
A1

# DEMANDE DE BREVET EUROPEEN

(12)

(21) Numéro de dépôt: **80810317.0**

(22) Date de dépôt: **20.10.80**

(51) Int. Cl.³: **B 23 B 7/06**, B 23 B 3/06

(43) Date de publication de la demande: **28.04.82**
**Bulletin 82/17**

(84) Etats contractants désignés: **AT BE CH DE FR GB IT LI LU NL SE**

(71) Demandeur: **Habegger, Harold, Sous Graitery 10, CH-2738 Court (CH)**

(72) Inventeur: **Habegger, Harold, Sous Graitery 10, CH-2738 Court (CH)**

(74) Mandataire: **Tordion, Serge, Cabinet de Conseil en brevets 23, rue du Marché-Neuf Case postale 182, CH-2500 Bienne 3 (CH)**

(54) **Dispositif d'entraînement d'une barre de matière par commande numérique dans un tour automatique.**

(57) Le dispositif d'entraînement d'une barre de matière par commande numérique dans un tour automatique fait tourner cette barre et la fait avancer dans le champ des outils (31, 39) au cours de l'usinage d'une pièce à son extrémité, par l'intermédiaire d'une broche (16). Cette broche est entraînée en rotation par un moteur (25), soumis à la commande numérique et dont la poulie (26) est reliée par une courroie (27) à une poulie (22), qui est axialement fixée dans une lunette (2) et qui est clavetée sur la broche (16). Un moteur pas à pas (15), également soumis à la commande numérique, sert à déplacer la broche (16) axialement par l'intermédiaire d'un engrenage (13, 12), qui agit sur un manchon fileté (8) non rotatif, solidaire axialement de la broche (16) et guidé dans un alésage (7) du corps de poupée (1), qui est fixé à une table (5) solidaire du bâti (6) du tour.

- 1 -

# DISPOSITIF D'ENTRAÎNEMENT D'UNE BARRE DE MATIÈRE PAR COMMANDE NUMÉRIQUE DANS UN TOUR AUTOMATIQUE

Dans les dispositifs d'entraînement connus, correspondant au préambule de la revendication 1, la broche qui entraîne la barre de matière est tourillonnée dans la poupée dans une position axiale, par rapport à cette dernière, qui est immuable. Pour faire avancer la barre de matière en direction des outils, au cours de l'usinage d'une pièce à l'extrémité de cette barre, c'est donc toute la poupée qui doit se déplacer sur le banc du tour. Dans ce type de tours automatiques, dits à poupée mobile [Langdrehautomaten - Swiss type lathes], une glissière trapézoïdale est formée sur le banc du tour et un sabot en queue d'aronde sous la semelle de la poupée.

Pour obtenir des déplacements précis de la poupée sur le banc du tour, c'est-à-dire pour garantir que cette poupée n'effectuera sur ce banc que de pures translations rectilignes, sans jeu et sans coincement, glissière et queue d'aronde doivent être exécutées avec un soin extrême, par une main d'œuvre hautement qualifiée.

- 2 -

Depuis un siècle que les mêmes usines fabriquent des tours automatiques à poupée mobile, commandés mécaniquement par des cames, les tours de main pour réaliser l'ajustement voulu des queues d'aronde des poupées dans les glissières des bancs de tours ont passé de génération en génération en s'affinant. Cet agencement reste cependant une opération laborieuse et délicate, qui ne saurait être confiée même à un bon mécanicien, s'il n'est pas expérimenté dans ce domaine particulier.

Or, en passant de la commande mécanique par cames à la commande numérique, l'entraînement de la barre de matière, en particulier en direction axiale, pendant l'usinage d'une pièce, n'a pas été repensé en fonction de ce nouveau moyen de commande. Les constructeurs ont conservé la poupée mobile avec son ajustement traditionnel sur le banc du tour.

Pour éviter ces complications, la présente invention s'écarte des chemins battus et vise à créer un dispositif d'entraînement de la barre de matière qui soit conçu spécifiquement en fonction de la commande numérique, agissant notoirement en envoyant des impulsions électriques à des moteurs pas à pas, ceux-ci convertissant ces impulsions en mouvements rotatifs.

La partie électronique du dispositif d'entraînement selon l'invention, qui constitue la commande numérique, ne fait toutefois pas partie de l'invention; elle est connue. Sur le marché, on trouve même des ensembles de différentes fabrications, déjà programmés en vue de la commande d'une machine-outil telle qu'un tour automatique, et auxquels il n'y a

- 3 -

plus qu'à communiquer les indications relatives à l'usinage d'une pièce déterminée.

Le dispositif d'entraînement défini par la caractéristique de la revendication 1 se distingue des dispositifs connus dans les tours automatiques monobroches à poupée mobile principalement par sa simplicité autant que par sa fiabilité. Les moyens de guidage prévus dans le dispositif d'entraînement selon l'invention pour déplacer la barre de matière axialement, impliquant l'ajustement d'un manchon cylindrique dans un alésage, sont, en effet, beaucoup plus simples, plus rapides et moins coûteux à réaliser que les queues d'aronde et les glissières traditionnelles.

Par ailleurs, la partie mobile avec la barre de matière dans le corps de poupée est poussée selon son axe par la roue dentée coaxiale au manchon fileté, c'est-à-dire d'une façon parfaitement symétrique par rapport aux forces de frottement s'opposant à cette poussée. En d'autres termes, la poussée exercée par la dite roue dentée est directement opposée à la résultante des forces de frottement agissant sur la partie mobile axialement dans le corps de poupée, ce qui n'est pas le cas des poupées mobiles connues, dans lesquelles la poussée est décalée par rapport à la résultante des forces de frottement, ce qui engendre un couple perturbateur, tendant à produire un coincement.

Après la conversion des impulsions électriques en mouvements de rotation, opérée par le moteur pas à pas, ces mouvements n'ont, en outre, plus à subir une nouvelle conversion, par leviers, bielles, glis-

- 4 -

sières ou autres organes similaires; ils peuvent être transmis tels quels à la dite roue dentée.

Grâce au moteur pas à pas, qui peut tourner dans les deux sens, un ressort de rappel pour faire reculer la poupée n'est, enfin, plus nécessaire.

L'absence d'efforts inutiles sur la partie mobile axialement dans le corps de poupée, la transmission homologique du mouvement depuis le rotor du moteur pas à pas à la roue dentée et la symétrie de l'action de celle-ci sur la dite partie mobile ont manifestement pour effet de rendre la commande de cette partie mobile plus douce et nettement plus fiable que dans les tours connus à poupée mobile.

La présence du manchon fileté entre la broche et le corps de poupée ne constitue pas un encombrement. Comme le définit la revendication 2, ce manchon peut en effet se substituer aux roulements à billes usuels. Grâce aux systèmes actuels de lubrification sous pression, les paliers lisses sont même plus efficaces que les roulements à billes.

Le mode d'entraînement en rotation de la broche, qui est défini par la revendication 3, a l'avantage d'éviter le décalage entre la dite poulie et celle de son moteur, qui se produit dans les tours connus, où la poulie d'entraînement de la broche se déplace axialement avec la poupée. Le mode d'entraînement selon la revendication 3 permet par conséquent de disposer le moteur d'entraînement de la broche à proximité de celle-ci et d'assurer la liaison entre les deux à l'aide d'une courroie courte.

Grâce à la lunette indépendante, définie par la revendication 4, le corps de poupée peut être fait

- 5 -

relativement court et la broche avoir néanmoins une course axiale relativement longue. Cette course dépend, en effet, de la longueur du dit manchon fileté, qui, dans ses positions axiales extrêmes, peut sortir partiellement du corps de poupée aussi bien à l'avant qu'à l'arrière de celui-ci.

La possibilité de monter le corps de poupée et la dite lunette en différents endroits du banc du tour, conformément à la revendication 5, permet tout d'abord de choisir les emplacements qui conviennent le mieux au pivotage de la broche et d'utiliser des broches et des manchons filetés de différentes longueurs, selon la longueur des pièces à usiner. Elle permet, en outre, d'inverser l'ordre de succesion des éléments montés sur le banc du tour, ce qui peut rendre service à un desservant de la machine qui serait gaucher, de même que dans un atelier où l'emplacement des machines serait tel que le desservant devrait se trouver de l'autre côté du tour.

Comme les rotations du moteur pas à pas n'ont plus à être converties, la liaison cinématique entre lui et la dite roue dentée peut être réalisée très simplement, ainsi que le définit la revendication 6, en évitant ainsi les imprécisions dues par exemple au fléchissement des leviers utilisés dans les dispositifs connus.

Des organes de retenue spéciaux pour la roue dentée ne sont pas indispensables; le corps de poupée peut être aménagé très simplement pour la recevoir, ainsi que le définit la revendication 7.

Les formes spéciales d'exécution selon la revendication 8 ont l'avantage d'être aussi simples que compactes.

La liaison entre la roue dentée et le manchon fileté, qui est définie par la revendication 9, a l'avantage de supprimer tout jeu entre ces deux organes, sans risque de friction excessive entre eux.

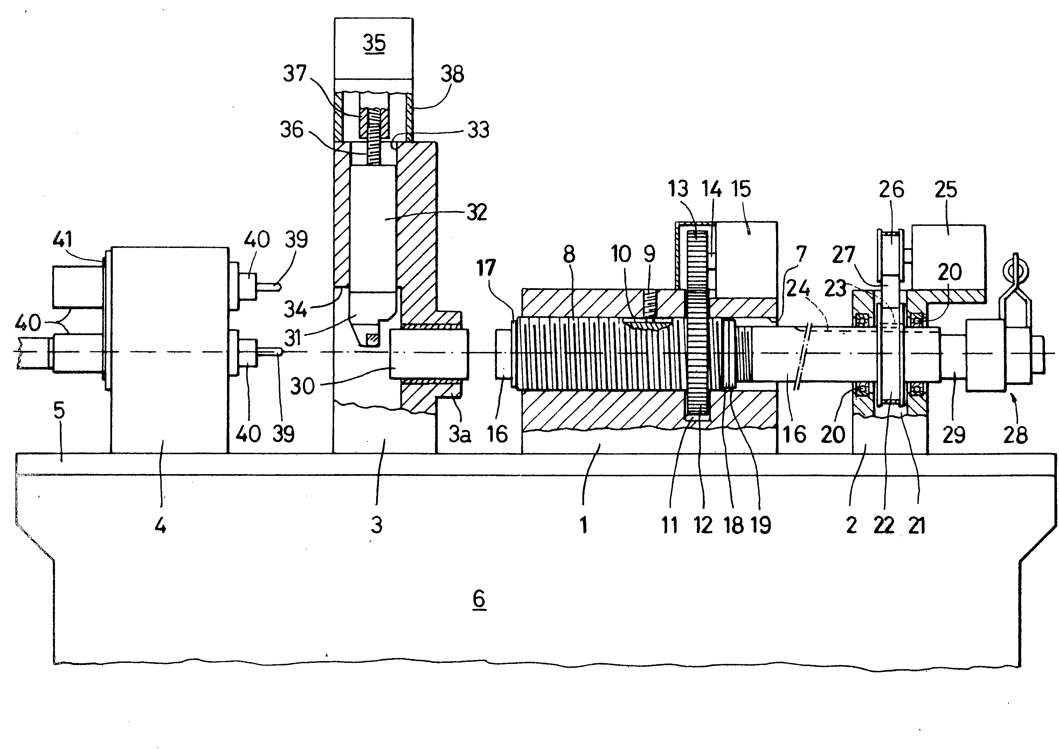

Une forme d'exécution du dispositif d'entraînement selon l'invention est représentée schématiquement et à titre d'exemple dans la figure unique du dessin, qui en est une vue en élévation, certaines parties étant coupées.

Le dispositif d'entraînement représenté fait partie d'un tour automatique qui comprend une poupée 1, une lunette 2, un support 3 et le bâti 4 d'un appareil en bout, qui, tous quatre, sont fixés chacun pour soi à une table 5, solidaire du bâti 6 du tour. A cet effet, la table 5 présente, le long de chacun de ses bords longitudinaux, une série de trous (non représentés) et les éléments 1 à 4 des oreilles (non représentées) correspondant aux trous de la table 5, afin de permettre la fixation de ces éléments à la table 5 au moyen de vis (non représentées). Ces moyens de fixation permettent non seulement de disposer les éléments 1 à 4 sur la table 5 aux distances voulues les uns des autres, mais aussi de les fixer à cette table dans l'ordre inverse par rapport au dessin, à la convenance du desservant du tour et selon la place disponible dans l'atelier, autour du bâti 6.

La poupée 1 présente un alésage traversant 7, dans lequel est monté un manchon fileté 8. Ce manchon 8 peut coulisser librement dans l'alésage 7, mais un prisonnier 9, plongeant dans une rainure longitudinale 10 du manchon 8, empêche ce dernier de tourner dans l'alésage 7 de la poupée 1. Le filetage du manchon 8 sera constitué de préférence par une creusure hélicoïdale, de section semicirculaire et d'un pas supérieur au diamètre de cette creusure, afin de laisser subsister une portion de surface cylindrique entre deux tours successifs de la dite creusure et d'assurer ainsi un ajustage précis du manchon 8 dans l'alésage 7.

La poupée 1 présente aussi une creusure transversale 11 pour une roue dentée 12, qui est en prise avec le filetage du manchon 8 et qui peut tourner librement dans la creusure 11, mais avec un jeu axial aussi réduit que possible. L'engagement de la roue 12 sur le filetage du manchon 8 peut être réalisé par un filetage interne de la roue 12 correspondant à celui du manchon 8. De préférence, cet engagement sera cependant assuré par un train de billes montées dans un passage axial de la roue 12, d'une façon bien connue des hommes du métier. Vu le faible frottement d'un tel train de billes dans une rainure de section semicirculaire du manchon 8, la roue 12 produira toujours un déplacement axial du manchon 8 qui sera proportionnel à ses angles de rotation. Lors d'une inversion du sens de rotation de la roue 12, il n'y aura donc pas d'angle "mort" de rotation de la roue avant que le manchon 8 ne soit déplacé. Cet engagement par train de billes a ainsi l'avantage de supprimer pratiquement les ébats, en évitant cependant la présence de moyens spéciaux, tels que des ressorts, qui augmentent la friction entre l'organe entraîneur et l'organe entraîné.

La denture de la roue 12 engrène sur un pi-

- 8 -

gnon 13 calé sur l'arbre 14 d'un moteur pas à pas 15. La commande de ce moteur, bien connue des hommes du métier, n'est pas représentée. Le moteur 15 tourne notamment d'un pas à chaque impulsion qu'il reçoit d'un générateur d'impulsions, et cela, dans un sens ou dans l'autre, selon la polarité des impulsions.

Le générateur d'impulsions est commandé par un ordinateur dont la mémoire peut être chargée, par exemple au moyen d'une bande perforée, sur laquelle figurent toutes les indications relatives aux opérations à effectuer pour usiner une pièce déterminée. Le générateur d'impulsions peut aussi être associé à un ordinateur agencé de façon que sa mémoire puisse être chargée directement de toutes les indications voulues, à l'aide d'un clavier à commande manuelle.

Ainsi, à chaque pas du moteur 15, la roue 12 tourne dans un sens ou dans l'autre d'une fraction de tour bien déterminée et le manchon 8 est déplacé vers l'avant ou vers l'arrière de la même fraction du pas de son filetage. Bien qu'il n'y ait qu'un seul organe (la roue 12) entre le moteur 15 et le manchon 8, l'agencement décrit produit une forte démultiplication de l'un à l'autre, c'est-à-dire un très petit déplacement axial du manchon 8 à chaque pas du moteur 15. Ce manchon peut ainsi être déplacé pratiquement de n'importe quelle quantité et cela quasiment sans à-coups. Par ailleurs, le petit nombre d'organes mécaniques se trouvant entre ce manchon et son moteur, a l'avantage de réduire aussi bien la dissipation d'énergie que le facteur d'imprécision.

Une broche rotative 16 a son extrémité antérieure pivotée dans le manchon 8. Elle présente, à cette extrémité, une collerette 17 et porte, de l'autre côté du manchon 8, un écrou 18 bloqué par un contre-écrou 19. Le manchon 8 est ainsi emprisonné axialement entre la collerette 17 et l'écrou 18, qui le solidarisent axialement à la broche 16, toutefois sans le bloquer, afin que la broche 16 puisse tourner librement, mais sans jeu axial dans le manchon 8.

L'extrémité postérieure de la broche 16 est pivotée dans la lunette 2 par l'intermédiaire de roulements à billes 20. Comme la poupée 1, la lunette 2 présente une creusure transversale 21 pour la poulie d'entraînement 22. Cette dernière est solidarisée en rotation à la broche 16 par une clavette 23, qui est engagée dans une rainure longitudinale 24 de la broche 16, pour lui permettre de se déplacer axialement par rapport à la poulie 22.

Cette poulie 22 est entraînée en rotation par un moteur à courant continu 25, au moyen d'un renvoi 26 et d'une courroie 27. Le moteur 25 est aussi soumis de façon connue au dispositif électronique de commande numérique, qui le fait tourner à chaque instant à la vitesse qui convient à l'opération d'usinage en cours.

En ce qui concerne l'usinage, la broche 16 fonctionne comme les poupées mobiles des tours conventionnels. Elle tient fermement une barre de matière, qu'elle entraîne en rotation. Pendant l'usinage d'une pièce à l'extrémité antérieure de cette barre, elle fait avancer progressivement cette dernière dans le champ des outils. Lorsque l'usinage d'une pièce est terminé et que celle-ci est tronçonnée de la barre, la broche 16 lâche cette barre, qu'elle laisse appuyée contre le burin à tronçonner, en reculant pour ressaisir la barre en vue de l'usinage d'une nouvelle pièce à son extrémité.

Pour effectuer ces opérations, la broche 16 contient une pince (non représentée) à son extrémité antérieure, dont la fermeture et l'ouverture sont commandées à l'aide d'un dispositif 28, par l'intermédiaire d'un manchon de serrage 29, qui s'étend tout le long de la broche 16.

Comme dans les tours automatiques à poupée mobile conventionnels, l'extrémité antérieure de la barre de matière entraînée par la broche 16 est soutenue par un canon de guidage 30, qui est monté dans le support 3, venu de fabrication avec une saillie tubulaire 3a, et qui la tient fermement dans le champ des outils.

Pour effectuer le décolletage des pièces à cette extrémité de la barre entraînée par la broche 16, des outils 31, disposés en éventail, sont montés dans le support 3, conformément à l'objet de la demande de brevet européen N° 80 81 0..... (déposée en même temps que la présente, au nom du même demandeur, sous le titre : "Tour automatique à commande numérique"). Chaque outil 31 est fixé à un coulisseau cylindrique 32, qui est ajusté dans un alésage 33 du support 3, de façon à pouvoir se déplacer librement, mais sans jeu, dans cet alésage. Les axes des alésages 33 sont situés dans un même plan, qui est perpendiculaire à l'axe de la broche 16, donc de la barre de matière entraînée par cette broche; ils sont disposés selon des rayons partant de cet axe. Chaque outil 31 peut ainsi être déplacé avec son coulisseau 32 dans l'alésage 33 correspondant, le long de ces rayons, entre une position de repos et sa position de travail. Au repos, chaque outil 31 sera juste assez éloigné de la pièce en travail pour libérer l'accès à celle-ci des autres outils.

L'espace situé à l'avant du canon 30 est dégagé, lorsque les outils 31 sont au repos, cela grâce à une creusure 34 du support 3.

Pour actionner les outils 31, un moteur pas à pas 35 est associé à chacun d'eux. Une tige filetée 36 est fixée au coulisseau 32, coaxialement à ce dernier, et un manchon taraudé 37, solidaire de l'arbre du moteur 35, est engagé sur cette tige 36. Une rotation du rotor du moteur 35 produit ainsi un déplacement du coulisseau 32 et de l'outil 31 le long de l'axe de l'alésage 33. Les moteurs 35 sont fixés au support 3, coaxialement aux coulisseaux 32, cette fixation étant réalisée à l'aide de manchons 38.

Comme le moteur 15, actionnant la broche 16 de la poupée 1, les moteurs 35 sont reliés de façon non représentée au même générateur d'impulsions, qui commande ainsi les déplacements des outils 31 comme ceux de la broche 16. Il est bien clair que cette commande pourra procéder par un mouvement d'approche rapide, pour amener les outils 31 de leur position de repos vers la pièce, puis par un mouvement lent, déterminé par l'épaisseur du copeau qu'on veut enlever, si l'outil en question travaille par fonçage. Le retrait de

- 12 -

l'outil pourra à nouveau s'effectuer en un mouvement rapide.

La face antérieure des pièces peut être usinée à l'aide d'outils 39, tels que des mèches, des forets, des tarauds, des filières, etc., portés par des broches 40 d'une tourelle revolver 41, montée dans le bâti 4.

Il résulte de la description précédente que la barre de matière est entraînée par le dispositif selon l'invention de façon à se déplacer comme dans les tours automatiques à poupée mobile traditionnels. Les moyens mécaniques qui produisent cet entraînement dans le dispositif selon l'invention sont toutefois beaucoup plus simples que dans les dispositifs connus, aussi bien à fabriquer et à assembler qu'à utiliser

REVENDICATIONS :

1. Dispositif d'entraînement d'une barre de matière par commande numérique dans un tour automatique, comprenant une broche de poupée destinée à entraîner une barre de matière en rotation et à avancer avec elle en direction des outils au cours de l'usinage d'une pièce à l'extrémité de cette barre, caractérisé

- en ce que la dite broche est solidaire axialement d'un manchon cylindrique, fileté extérieurement, dans lequel elle peut tourner librement,
- en ce que ce manchon est monté coulissant dans un alésage d'un corps de poupée, qui est fixé au banc du tour et qui empêche le dit manchon de tourner,
- en ce qu'une roue dentée, coaxiale au manchon, montée dans une position axiale fixe, est en prise avec le filetage de ce manchon de façon à lui faire exécuter dans son alésage des déplacements rigoureusement proportionnels aux angles de rotation de la roue et
- en ce qu'un moteur pas à pas, soumis à la commande numérique qui peut le faire tourner dans les deux sens, a son rotor relié sans jeu à la dite roue dentée.

2. Dispositif d'entraînement selon la revendication 1, caractérisé en ce que le manchon tient lieu de palier à la broche.

3. Dispositif d'entraînement selon la revendication 1 ou la revendication 2,

caractérisé

par une poulie qui est maintenue dans une position axiale bien déterminée et qui est clavetée sur la broche, afin de pouvoir l'entraîner en rotation dans toute position axiale que la broche peut occuper.

4. Dispositif d'entraînement selon la revendication 3,

caractérisé

en ce que la dite poulie est emprisonnée axialement dans une creusure d'une lunette indépendante, fixée au banc du tour et

en ce que la broche est pivotée dans cette lunette par l'intermédiaire de roulements à billes.

5. Dispositif d'entraînement selon la revendication 4,

caractérisé

en ce que la dite lunette et le corps de poupée sont fixés de façon amovible au banc du tour, qui présente plusieurs emplacements pour les recevoir.

6. Dispositif d'entraînement selon l'une ou l'autre des revendications précédentes,

caractérisé

en ce que le rotor du moteur pas à pas est relié à la dite roue dentée par engrenage.

7. Dispositif d'entraînement selon l'une ou l'autre des revendications précédentes,

caractérisé

en ce que la dite roue dentée est montée dans une creusure transversale du corps de poupée, dont la largeur est égale à l'épaisseur de cette roue.

8.   Dispositif d'entraînement selon les revendications 6 et 7,

caractérisé

- en ce que le moteur pas à pas est monté sur le corps de poupée et

- en ce que son arbre de sortie porte un pignon en prise avec la roue dentée.

9.   Dispositif d'entraînement selon la revendication 6 ou la revendication 7 ou la revendication 8,

caractérisé

en ce que la dite roue dentée est en prise avec le filetage du dit manchon par l'intermédiaire d'au moins un train de billes.

0050178

Office européen
des brevets

**RAPPORT DE RECHERCHE EUROPEENNE**

0050178

Numéro de la demande

EP 80 81 0317

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 2 314 006 (INDEX-WERKE)<br>* page 10, lignes 28-35; figures 1 et 2 * | 1,2 | B 23 B 7/06<br>B 23 B 3/06 |
| | -- | | |
| | FR - A - 2 121 059 (SEIKO)<br>* page 3, lignes 20-30; page 4, lignes 24-35; figures 3 et 6 * | 1,2 | |
| | -- | | DOMAINES TECHNIQUES RECHERCHES (Int. Cl.³) |
| A | FR - A - 2 275 267 (MICRO-MECANIQUE) | | B 23 B 7/00<br>B 23 B 3/00 |
| | ---- | | |

**CATEGORIE DES DOCUMENTS CITES**

X: particulièrement pertinent
A: *arrière-plan technologique*
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15.06.1981 | BOGAERT |

OEB Form 1503.1  06.78